# EUROPÄISCHE PATENTANMELDUNG

(11) **EP 2 327 903 A2**
(43) Veröffentlichungstag der Anmeldung: **01.06.2011**
(21) Anmeldenummer: 10192330.8
(22) Anmeldetag: 24.11.2010
(51) Int. Cl.: F16F 9/348, F16F 9/512

(54) **Dämpfventileinrichtung mit einer mehrstufigen Dämpfkraftkennlinie**

(30) Priorität: 30.11.2009 DE 102009047261
(71) Anmelder: ZF Friedrichshafen AG, 88038 Friedrichshafen (DE)
(72) Erfinder: Braunreuther, Hubert, 97437 Haßfurt (DE); Moller, Robert, 97491 Aidhausen (DE)

(57) **Zusammenfassung**

Dämpfventileinrichtung (3) für einen Schwingungsdämpfer (1), umfassend einen Dämpfventilkörper (9,25) mit mindestens zwei hydraulisch parallel geschalteten Durchtrittskanälen (15,33) für eine Strömungsrichtung eines Dämpfmedium, wobei Austrittsquerschnitte der mindestens zwei Durchtrittskanäle jeweils von einer Ventilscheibenanordnung (17,35) beeinflusst wird, so dass ein erstes und ein zweites Dämpfventil (19,23) vorliegen, und ein Schließventil (49) in Reihe zu einem der der Durchtrittskanäle angeordnet ist, wodurch die Dämpfventileinrichtung eine Mehrzahl von Dämpfkraftstufen aufweist; wobei das Schließventil in Abhängigkeit der Strömungsgeschwindigkeit des Dämpfmediums durch die Dämpfventileinrichtung eine Schließbewegung ausführt.

## Beschreibung

Die Erfindung betrifft eine Dämpfventileinrichtung mit einer mehrstufigen Dämpfkraftkennlinie gemäß dem Oberbegriff von Patentanspruch 1.

Bei einem Schwingungsdämpfer mit einer konventionellen Dämpfventileinrichtung, d. h. nicht über einen Aktuator willkürlich verstellbar, läuft die Abstimmung der Dämpfkraftkennlinie stets auf einen Kompromiss aus. Einerseits soll die Fahrsicherheit gewährleistet werden, wofür eine große Dämpfkraft sinnvoll ist und andererseits soll ein Komfortanspruch erfüllt werden. Dieser Widerspruch ist mit einem konventionellen Dämpfventil nur schwerlich zu leisten.

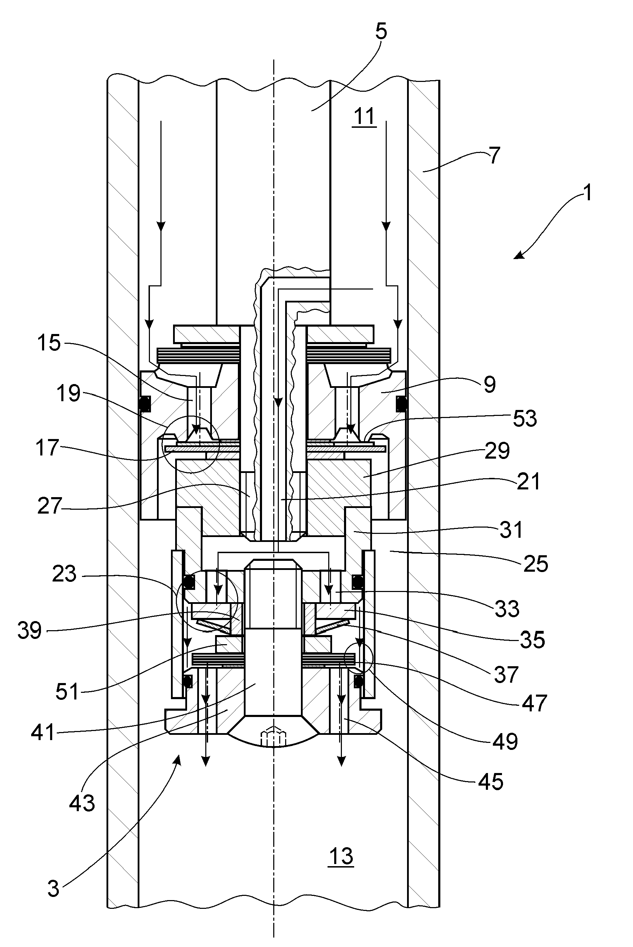

Aus der DE 20 22 021 A1 ist ein Schwingungsdämpfer mit einer Dämpfventileinrichtung bekannt, deren Dämpfkraftkennlinie mindestens vier Dämpfkraftkennliniebereiche aufweist (Fig. 9). Dazu kommen zwei parallel geschaltete Dämpfventile zur Anwendung, die ein unterschiedliches Öffnungsverhalten und im maximalen Öffnungszustand eine unterschiedliche Drosselwirkung erzielen.

Mit einer derartigen Konstruktion lassen sich die notwendige Dämpfkräfte deutlich besser den verschiedenen Anforderungen anpassen.

Die DE 17 80 003 A1 betrifft einen Schwingungsdämpfer, der in der Ausführung nach Fig. 2 ebenfalls ein erstes und ein zweites Dämpfventil unterschiedlicher Öffnungscharakteristik aufweist. Über einen Axialkanal in der Kolbenstange wird das Dämpfmedium dem zweiten Dämpfventil zugeführt. Wenn eine definierte Frequenz der auf den Schwingungsdämpfer einwirkenden Anregung erreicht wird, dann verschließt ein Schieber den Zustrom zum zweiten Dämpfventil, so dass die Dämpfkraft nochmals gesteigert werden kann.

Die Aufgabe der vorliegenden Erfindung besteht darin, eine mehrstufige Dämpfventileinrichtung bereitzustellen, die insgesamt einen einfachen Aufbau aufweist und sich mit wenig Aufwand einer vorbestimmten Dämpfkraftkennlinie anpassen lässt.

Erfindungsgemäß wird die Aufgabe dadurch gelöst, das Schließventil in Abhängigkeit der Strömungsgeschwindigkeit des Dämpfmediums durch die Dämpfventileinrichtung eine Schließbewegung ausführt.

Abweichend zum Stand der Technik ist das Schließverhalten nicht auf eine bestimmte Anregung bzw. Frequenz, sondern auf die Strömungsgeschwindigkeit ausgelegt. Die Abstimmung der Dämpfventileinrichtung auf einen Schwingungsdämpfer in einem Fahrzeug ist deutlich einfacher möglich.

In weiterer vorteilhafter Ausgestaltung wird das Schließventil von mindestens einer Ventilscheibe gebildet, die mit einer Sitzfläche des Dämpfventilkörpers zusammenwirkt.

Dabei ist vorgesehen, dass das zweite Dämpfventil in einem Dämpfventilgehäuse mit einer Trennscheibe angeordnet ist, wobei die Trennscheibe die Durchlasskanäle aufweist.

Gemäß einem vorteilhaften Unteranspruch weist das Dämpfventilgehäuse einen Boden auf, wobei der Boden mindestens einen Durchtrittskanal aufweist, der von der Ventilscheibe zumindest teilverschlossen wird.

Der Boden und die Trennscheibe sind über ein bolzenförmiges Befestigungsmittel im axialen Abstand miteinander verbunden, wobei innerhalb der Verspannungskette zwischen dem Boden und der Trennscheibe die Ventilmittel für das zweite Dämpfventil und dem Schließventil verspannt sind.

Eine Ventilfeder des zweiten Dämpfventils stützt sich auf einer Stützscheibe der mindestens einen Ventilscheibe des Schließventil abstützt.

Alle konstruktiven Maßnahmen für das Dämpfventilgehäuse zielen auf einen einfachen Aufbau und eine gute Zugänglichkeit zu den Ventilbauteilen ab, damit einerseits eine Abstimmung und andererseits eine einfache Montage der Dämpfventileinrichtung möglich sind.

Anhand der folgenden Figurenbeschreibung soll die Erfindung näher erläutert werden. Die einzige Figur zeigt einen Ausschnitt aus einem Schwingungsdämpfer 1 im Bereich einer Dämpfventileinrichtung 33 an einer Kolbenstange 5 innerhalb eines Zylinders 7. Ein Kolben 9 als Teil der Dämpfventileinrichtung 3 unterteilt den Zylinder 7 in einen kolbenstangenseitigen und einen kolbenstangenfernen Arbeitsraum 11; 13. In dem Kolben 9 ist pro Durchströmungsrichtung des im Zylinder 7 befindlichen Dämpfmediums mindestens ein Durchtrittskanal 15 ausgeführt, dessen Austrittsöffnung von mindestens einer Ventilscheibe 17 zumindest teilweise abgedeckt ist und damit ein erstes Dämpfventil 19 bildet. In dieser konkreten Ausführungsform sind zwei Durchtrittskanäle für eine Durchströmung bei einer Ausfahrbewegung der Kolbenstange eingezeichnet. Für eine Einfahrbewegung vorgesehene Durchtrittskanäle sind in einer anderen Schnittebene des Kolbens 9 ausgeführt und deshalb nicht erkennbar.

Über einen Axialkanal 21 innerhalb der Kolbenstange 5 ist ein zweites Dämpfventil 23 dem ersten Dämpfventil 19 hydraulisch parallel geschaltet. Das zweite Dämpfventil 23 ist innerhalb eines Dämpfventilgehäuses 25 im kolbenstangenfernen Arbeitsraum 13 ausgeführt. Befestigt ist das Dämpfventilgehäuse 25 an einem Koibenstangenzapfen 27, der auch den Kolben 9 für das erste Dämpfventil 19 trägt. Ein Deckel des Dämpfventilgehäuses 25 fungiert als Kolbenmutter für den Kolben 9. Mit dem Deckel 29 ist eine topfförmige Trennscheibe 31 verschraubt, die Durchlasskanäle 33 für das zweite Dämpfventil 23 aufweist. Das zweite Dämpfventil 23 umfasst ein axial bewegliches Ventilelement 35, das von einer Tellerfeder 37 auf die Trennscheibe 31 vorgespannt wird. Das Ventilelement 35 wird von einer Hülse 39 auf einem zentralen bolzenförmigen Befestigungselement 41 geführt, das einen Boden 43, der ebenfalls mindestens einen Durchtrittskanal 45 in einem axialen Abstand mit der Trennscheibe 31 verbindet. Der Durchtrittskanal 45 wirkt mit mindestens einer elastischen Ventilscheibe 47 zusammen, die bei Kolbenstangenstillstand den Durchtrittskanal 45 maximal freigibt, jedoch ab einer definierten Kolbenstangengeschwindigkeit eine Schließventilfunktion ausübt. Die mindestens eine Ventilscheibe des Schließventils ist innerhalb der Verspannungskette zwischen der Trennscheibe 31 und dem Boden 43 unter Verwendung einer Stützscheibe 51 verspannt.

Bei einer kleinen Kolbenstangengeschwindigkeit kann Dämpfmedium durch einen so genannten Voröffnungsquerschnitt 53 durch das erste Dämpfventil 19 vom kolbenstangenseitigen Arbeitsraum 11 in den kolbenstangenfernen Arbeitsraum 13 übertreten. Der Voröffnungsquerschnitt 53 kann von einer Aussparung in einer Ventilscheibe 17 oder einer Prägung im Kolben 9 gebildet werden.

Bei etwas größerer Anströmung der Ventilscheiben 17 öffnet das erste Dämpfventil 19, so dass eine weitere Dämpfkraftkennliniestufe erreicht wird.

Nimmt die Ausfahrgeschwindigkeit weiter zu, dann bewirkt der Druck innerhalb des Dämpfventilgehäuses zwischen dem Deckel 29 und der Trennscheibe 31 eine Abhubbewegung des Ventilelements am zweiten Dämpfventil 23. Nun wird die Dämpfkraft von der Summe beider Dämpfventile 19; 23 bestimmt. Das durch die Durchtrittskanäle 33 des zweiten Dämpfventils 23 verdrängte Dämpfmedium kann durch das geöffnete Schließventil 49 in den kolbenstangenfernen Arbeitsraum 13 fließen.

Steigt die Kolbenstangengeschwindigkeit nochmals weiter an, dann wirken die Durchtrittskanäle 33 des zweiten Dämpfventils 23 als Drosseln. Eine weitere Dämpfkraftsteigerung kann noch erreicht werden, wenn das Schließventil 49 die Schließposition einnimmt, indem sich die elastischen Ventilscheiben 47 unter dem Druck des Dämpfmediums zwischen der Trennscheibe 31 und einem Boden 43 des Dämpfventilgehäuses 25 in Richtung auf die Oberseite des Bodens 43 verformen. Im Extremfall sind die Durchtrittkanäle 45 im Boden 43 vollständig verschlossen, so dass das gesamte Dämpfmedium durch das erste Dämpfventil 17 strömen muss, wodurch die maximale Dämpfkraft erzeugt wird.

### Bezugszeichenliste

- 1: Schwingungsdämpfer
- 3: Dämpfventileinrichtung
- 5: Kolbenstange
- 7: Zylinder
- 9: Kolben
- 11: kolbenstangenseitiger Arbeitsraum
- 13: kolbenstangenferner Arbeitsraum
- 15: Durchlasskanal
- 17: Ventilscheibe
- 19: erstes Dämpfventil
- 21: Axialkanal
- 23: zweites Dämpfventil
- 25: Dämpfventilgehäuse
- 27: Ko!benstangenzapfen
- 29: Deckel
- 31: Trennscheibe
- 33: Durchlasskanäle
- 35: bewegliches Ventilelement
- 37: Tellerfeder
- 39: Hülse
- 41: Befestigungselement
- 43: Boden
- 45: Durchtrittskanal
- 47: Ventilscheibe
- 49: Schließventil
- 51: Stützscheibe
- 53: Voröffnungsquerschnitt

## Patentansprüche

1. Dämpfventileinrichtung (3) für einen Schwingungsdämpfer (1), umfassend einen Dämpfventilkörper (9; 25) mit mindestens zwei hydraulisch parallel geschalteten Durchtrittskanälen (15; 33) für eine Strömungsrichtung eines Dämpfmedium, wobei Austrittsquerschnitte der mindestens zwei Durchtrittskanäle (15; 33) jeweils von einer Ventilscheibenanordnung (17; 35) beeinfiusst wird, so dass ein erstes und ein zweites Dämpfventil (19; 23) vorliegen, und ein Schließventil (49) in Reihe zu einem der der Durchtrittskanäle (33) angeordnet ist, wodurch die Dämpfventileinrichtung (3) eine Mehrzahl von Dämpfkraftstufen aufweist; **dadurch gekennzeichnet,**
**dass** das Schließventil (49) in Abhängigkeit der Strömungsgeschwindigkeit des Dämpfmediums durch die Dämpfventileinrichtung (25) eine Schließbewegung ausführt.

2. Dämpfventileinrichtung nach Anspruch 1,
**dadurch gekennzeichnet,**
**dass** das Schließventil (49) von mindestens einer Ventilscheibe (47) gebildet wird, die mit einer Sitzfläche des Dämpfventilkörpers (25) zusammenwirkt.

3. Dämpfventileinrichtung nach Anspruch 1,
**dadurch gekennzeichnet,**
**dass** das zweite Dämpfventil (23) in einem Dämpfventilgehäuse (25) mit einer Trennscheibe (31) angeordnet ist, wobei die Trennscheibe (31) die Durchlasskanäle (33) aufweist.

4. Dämpfventileinrichtung nach Anspruch 3,
**dadurch gekennzeichnet,**
**dass** das Dämpfventilgehäuse (25) einen Boden (43) aufweist, wobei der Boden (43) mindestens einen Durchtrittskanal (45) aufweist, der von der Ventilscheibe (47) zumindest teilverschlossen wird.

5. Dämpfventileinrichtung nach den Ansprüchen 3 und 4 ,
**dadurch gekennzeichnet,**
**dass** der Boden (43) und die Trennscheibe (31) über ein bolzenförmiges Befestigungsmittel (51) im axialen Abstand miteinander verbunden sind, wobei innerhalb der Verspannungskette zwischen dem Boden (43) und der Trennscheibe (31) die Ventilmittel für das zweite Dämpfventil (23) und dem Schließventil (49) verspannt sind.

6. Dämpfventil nach Anspruch 1,
**dadurch gekennzeichnet,**
**dass** sich eine Ventilfeder (37) der mindestens einen Ventilscheibe (35 des zweiten Dämpfventils (23) auf einer Stützscheibe (51) des Schließventil (49) abstützt.
